(19) **Europäisches Patentamt**

**European Patent Office**

**Office européen des brevets**

(11) **EP 1 001 002 A2**

(12) **EUROPEAN PATENT APPLICATION**

(43) Date of publication:
**17.05.2000 Bulletin 2000/20**

(51) Int. Cl.⁷: **C10J 3/00**, B01D 53/02, C01B 3/56

(21) Application number: **99108466.6**

(22) Date of filing: **30.04.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.11.1998 JP 35684698**

(71) Applicants:
• **Center for Coal Utilization,
Japan Tokyo Nissan Building 7F
Tokyo 106-0032 (JP)**
• **Director General of Agency of Industrial Science and Technology
Tokyo 100-8921 (JP)**

(72) Inventors:
• **Lin, Shi-Ying,
c/o Center for Coal Utilization
Minato-ku, Tokyo 106-0032 (JP)**
• **Hatano, Hiroyuki,
c/o Nat.Inst.f.Resources a.Envi.
Tsukuba-shi, Ibaraki-ken 305-8569 (JP)**
• **Suzuki, Yoshizo,
c/o Nat.Inst.f.Resources a.Envi.
Tsukuba-shi, Ibaraki-ken 305-8569 (JP)**

(74) Representative:
**Goddar, Heinz J., Dr.
FORRESTER & BOEHMERT
Franz-Joseph-Strasse 38
80801 München (DE)**

(54) **Method for producing hydrogen by thermochemical decomposition**

(57) Organic materials such as coal, petroleum, plastics, biomass, etc. is decomposed by use of supercritical water to selectively product hydrogen. A thermochemical reaction is promoted to reduce supercritical water and selectively produce hydrogen without substantially adding any oxidizing agent in the supercritical water of specific temperature and pressure in the presence of a carbon dioxide absorbing substance in an amount sufficient to absorb all of generated carbon dioxide.

EP 1 001 002 A2

**Description**

The present invention relates to hydrogen production technology, and more particularly to a method for selectively producing hydrogen by thermochemically decomposing supercritical water by use of heat generated during oxidation of carbon contained in organic materials.

Methods for producing hydrogen have been conventionally known, which include thermal decomposition of organic materials such as coal, petroleum, etc. under a condition of high temperature and pressure to form hydrogen gas, conversion of water gas, electrolysis of water, and the like.

Although there are several processes for decomposing organic materials such as coal, petroleum, plastics, biomass, etc. to gasify thereof, various kinds of oxidation decomposing methods are most widely used. Among others, an oxidation decomposing method by use of supercritical water is popular recently because of higher decomposition rate.

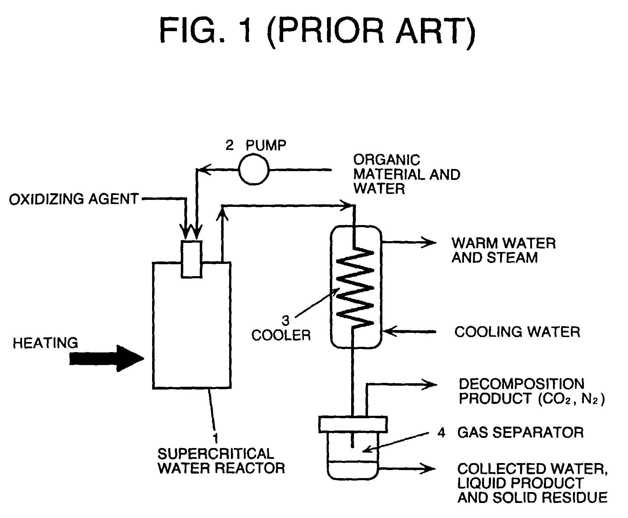

Fig. 1 shows a conventional oxidation decomposing method of organic materials by use of supercritical water.

After organic materials and water are mixed, the mixture is pumped to a supercritical water reactor 1 where water in supercritical state is formed by means of a pump 2, kept in the supercritical water reactor 1 at a temperature of about 400 °C for a predetermined period of reaction time and then cooled by means of cooler 3 under reduced pressure to form a gaseous oxidation decomposed product, water and solid residue. Air or oxygen as an oxidizing agent is supplied to the supercritical water reactor 1 to keep the supercritical state while externally heating the reactor if heat generated therein is not enough.

Under the above mentioned reaction condition, the gaseous oxidation decomposed product predominantly comprises carbon dioxide and nitrogen gas originated from nitrogen components contained in the organic materials. According to a conventional process, thermal decomposition is conducted in supercritical water at a temperature of 400 to 600 °C only with external heating without supplying any oxidizing agent, which results in a gaseous thermal decomposition product containing carbon monoxide, carbon dioxide, lower hydrocarbon, hydrogen and nitrogen as a main component and, in many cases, a liquid product. As a temperature of thermal decomposition increases, yield of the gaseous product increases but that of hydrogen decreases.

In conventional processes, it has been variously investigated to recover a gaseous product obtained by thermal decomposition of organic materials in supercritical water, however, no one has proposed to recover hydrogen by reducing the supercritical water by use of carbon contained in the organic materials.

The inventors have investigated how to cause thermochemical decomposition of water and to effectively reduce supercritical water. As a result, it has been found that such reduction and decomposition can be conducted by a combination of supercritical water of a specific condition and a carbon dioxide absorbing substance substantially without adding any oxidizing agent.

When organic materials are decomposed by supercritical water without adding any oxidizing agent, thermal decomposition thereof at about 400 °C does not proceed completely and yields a gaseous product containing carbon monoxide, carbon dioxide, hydrogen, nitrogen, lower hydrocarbon and the like as a main component and a liquid product. In this case, a hydrogen content in the gaseous product is considerably low.

When the reaction temperature is further increased up to 650 °C, the liquid product disappears and the organic materials are completely gasified. The thus formed gaseous product comprises carbon monoxide, carbon dioxide and hydrogen as a main component, while composition thereof is limited within a value of thermodynamical equilibrium which is determined by the reaction temperature and the reaction pressure, thereby the hydrogen content being about 30 %.

According to the present invention, it has been found that the hydrogen content in the gaseous product formed by the reaction is successfully increased to a considerable degree while keeping the thermodynamical equilibrium by use of supercritical water of a specific condition and a gas absorbing substance.

Further, it has been found that sulfur and halogen are captured in a reactor without entraining in the formed gaseous product which can be finally recovered as a water soluble salt from the reactor.

Substantial absence of an oxidizing gent during he reaction of the present invention means that an addition of the oxidizing agent is not necessary, of course, but also means that removal of air, etc. contained in reagents or starting materials is not necessary while charging thereof into a reaction unit. This improves the compressing energy consumption because supply of high pressure air can be omitted, and advantageously reduces the operating cost of the unit as a whole.

The hydrogen content in the gaseous product is not so increased when the organic materials are thermally decomposed in supercritical water even at a temperature of 650 °C, because carbon monoxide, steam, carbon dioxide and hydrogen contained in the gaseous product formed by the reaction of the organic materials and supercritical water are kept in a state of chemical equilibrium. The equilibrium reaction is represented as in the following:

$$CO + H_2O = CO_2 + H_2 \qquad (1)$$

When an excessive amount of substance which reacts with carbon dioxide to form a solid product under a condition of temperature and pressure used in the reactor and never affects the above mentioned chemical equilibrium is coexisted in advance in the reaction system as a carbon dioxide absorbing substance, an amount of carbon dioxide contained in the gaseous product is reduced by a reaction thereof with the substance.

As the amount of carbon dioxide decreases, CO and $H_2O$ is inevitably reacted to form and $H_2$ in order to sustain the chemical equilibrium. The thus formed $CO_2$ is reacted with the carbon dioxide absorbing substance and removed from the gaseous product.

As a result, the gaseous product finally attains to chemical equilibrium in which a negligible amount of carbon monoxide and carbon dioxide and a considerable amount of steam and hydrogen exist. It is possible to separate the gaseous product and a solid mixture consisting of an ash content of the organic materials, the unreacted carbon dioxide absorbing substance and a solid reaction product thereof, steam being cooled to collect as water. Thus, the gaseous product containing hydrogen as a main component can be produced from the organic materials.

A chemical reaction formula of carbon dioxide absorption is represented as in the following:

$$C + 2H_2O + X = (XCO_2) + 2H_2 \qquad (2)$$

wherein X is a carbon dioxide absorbing substance.

As the thus formed hydrogen gas is originated from water, the reaction formula (2) shows that hydrogen is selectively produced from carbon contained in the organic materials and water, which is regarded as a thermochemical decomposing reaction.

Heat source for conducting the reaction includes heat of combustion caused from oxidation of carbon contained in the organic materials and a carbon dioxide absorbing substance to be added to the reaction system. For example, CaO as the absorbing substance radiates heat of reaction thereof with water to form $Ca(OH)_2$, which can be used as the heat source as a matter of course. External heating may be employed to promote the reaction (2), if necessary.

In order to conduct the following reaction of the carbon dioxide absorbing agent X,

$$X + CO_2 = XCO_2 \qquad (3)$$

the reaction system should be heated above a thermodynamically determined temperature.

Accordingly, the reaction system of the present invention is inevitably subjected to a temperature higher than what is achieved by the reaction formula (3).

A typical carbon dioxide absorbing substance includes an oxide of metals such as CaO, MgO, iron oxide ($FeO$, $Fe_2O_3$, $Fe_3O_4$), etc. and a hydroxide of similar metals such as $Ca(OH)_2$, $Mg(OH)_2$, $Fe(OH)_2$, $Fe(OH)_3$, etc. The most preferably, CaO or $Ca(OH)_2$ is used from a standpoint of economy. In addition, MgO, $Mg(OH)_2$, FeO, $Fe_2O_3$ or $Fe_3O_4$ is also effective as the absorbing substance.

As each of these hydroxides results in a dehydration reaction under a high temperature condition as in the following,

$$Ca(OH)_2 = CaO + H_2O \qquad (4)$$

$$Mg(OH)_2 = MgO + H_2O \qquad (5)$$

the reaction is conducted in a similar manner as in the case where an oxide of similar metals is initially added.

A sulfur component in the organic materials reacts with the absorbing substance X in the process of the reaction to form sulfate thereof as a solid product, which is hardly soluble in water and accordingly not preferable. In order to prevent such inconvenience, another substance Y which easily reacts with $H_2S$ formed in the process of gasification is added to form a water soluble reaction product of Y and $H_2S$.

As the sulfur component in the organic materials becomes water soluble as described above, it is possible to separate sulfur from other solid products such as reacted and unreacted carbon dioxide absorbing substance, the ash content in organic materials, etc. A halogen component in the organic materials also forms water soluble salt.

The above mentioned substance Y includes NaOH, $Na_2CO_3$, KOH and $K_2CO_3$ It is convenient that the substance Y generally plays a roll of catalyst to promote the reaction between the organic materials and water in a supercritical condition. Only $Na_2CO_3$ is used as the substance Y in the examples which will be described in the following, although NaOH, KOH or $K_2CO_3$ functions similarly.

It is necessary to thermodynamically determine a progress of the reaction. Heat of reaction of the main reaction is as in the following:

$$C + H_2O = CO + H_2 \quad 31.4 \text{ kcal. (endothermic reaction)} \tag{6}$$

$$H_2O + CO = CO_2 + H_2 \quad -9.9 \text{ kcal. (exothermic reaction)} \tag{7}$$

$$CaO + CO_2 = CaCO_3 \quad -42.5 \text{ kcal. (exothermic reaction)} \tag{8}$$

Accordingly, as the reaction as a whole is represented as in the following:

$$C + 2H_2O + CaO = CaCO_3 + 2H_2 \quad -21.0 \text{ kcal. (exothermic reaction)} \tag{9}$$

it is considered that the reaction is at least exothermic, and proceeds spontaneously from a thermodynamic standpoint.

Fig. 1 is an illustration of a conventional technique for thermally decomposing organic materials by oxidation using supercritical water;
Fig. 2 is a cross sectional view of a system used in the present invention;
Fig. 3 is an illustration of experimental results demonstrating a principle of the present invention and an effect of catalyst;
Fig. 4 is an illustration of experimental results showing quantity and composition of gas generated by reacting various kinds of coal and supercritical water under a condition of the present invention;
Fig. 5 is an illustration of experimental results showing quantity and composition of gas generated by reacting various kinds of organic materials other than coal and supercritical water under a condition of the present invention; and
Fig. 6 is a flowchart of a hydrogen production process starting from an organic material according to the present invention.

Mode of the present invention is as follows:

1. A method for producing hydrogen by reacting a carbon containing material and supercritical water followed by reduction thereof to form hydrogen, characterized in that thermochemical decomposition of the carbon containing material is conduced in the presence of a carbon dioxide absorbing substance at least in an amount sufficient to absorb all of generated carbon dioxide in a reaction system under a condition of pressure higher than 220 atmosphere and temperature higher than 600 °C without substantially adding an oxidizing agent.
2. A method for producing hydrogen described in the above item 1 in which a carbon containing material and a carbon dioxide absorbing substance are supplied to a reaction system, while hydrogen and a carbonate are taken out of the reaction system.
3. A method for producing hydrogen described in the above item 1 or 2 in which a carbonate is converted by thermal decomposition to a carbondioxide absorbing substance so as to recycle thereof to a reaction system.
4. A method for producing hydrogen described in any one of the above items 1 to 3 in which CaO, MgO or iron oxide (FeO, $Fe_2O_3$ or $Fe_3O_4$) is used as a carbondioxide absorbing substance.
5. A method for producing hydrogen described in any one of the above items 1 to 4 in which a carbon containing material is one or more than two of coal, petroleum, plastics and biomass.
6. A method for producing hydrogen described in any one of the above items 1 to 5 in which reaction temperature is 650 to 800 °C.
7. A method for producing hydrogen described in any one of the above items 1 to 6 in which pressure is 250 to 600 atmosphere.
8. A method for producing hydrogen described in any one of the above items 1 to 6 in which, in addition to a carbondioxide absorbing substance, a substance of forming a water soluble salt with sulfur and halogen is present at least in an amount sufficient to absorb all of generated sulfur and halogen in a reaction system.
9. A method for producing hydrogen described in any one of the above items 1 to 7 in which a substance capable of forming a water soluble salt with sulfur and halogen is one or more than two compounds selected from a group consisting of NaOH, $Na_2CO_3$, KOH and $K_2CO_3$..

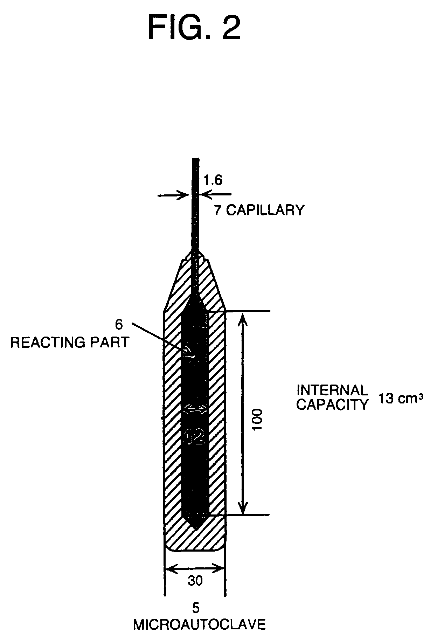

There was used a microautoclave 5 having an outer diameter of 30 mm provided with a capillary 7 as shown in Fig. 2 to carry out the present invention. Pressure in the microautoclave 5 was changed by controlling quantity of pure water to be initially charged and heating temperature. Pressure of reaction was obtained by the following equation of state:

$$P = RT/(V_m - b) - a/V_m{}^2$$

wherein p represents pressure, R represents gas constant, T represents absolute temperature, $V_m$ represents quantity of water and a and b are constants.

Example 1

After 0.1 g of pulverized Taiheiyo Coal (carbon content of 76 %), excessive equivalent weight, 0.6 g, of $Ca(OH)_2$ powder and specified quantity, 4 cc, of pure water were mixed, the mixture was injected in a reaction vessel 6 having an inner diameter of 12 mm by means of a syringe through a capillary 7 having a bore diameter of 1.6 mm, externally heated in an electric furnace and reacted for 20 minutes at a temperature of 650 °C under a pressure of 1,000 atmosphere. Then, the reaction mixture was cooled, and the generated gas was collected in a sampling bag to measure quantity of the thus generated gas, while composition thereof was determined by gas chromatography. Solid and liquid products left in the reaction vessel were collected and analyzed.

Example 2

A similar process was repeated under the same condition except that 0.1 g of sodium carbonate was added to the reaction system.

Example 3

A process of Example 1 was similarly repeated except that 0.03 g of Taiheiyo Coal, 0.2 g of $Ca(OH)_2$, 0.03 g of $Na_2CO_3$ and 1 cc of pure water to be initially charged were used under a pressure of 300 atmosphere.

Example 4

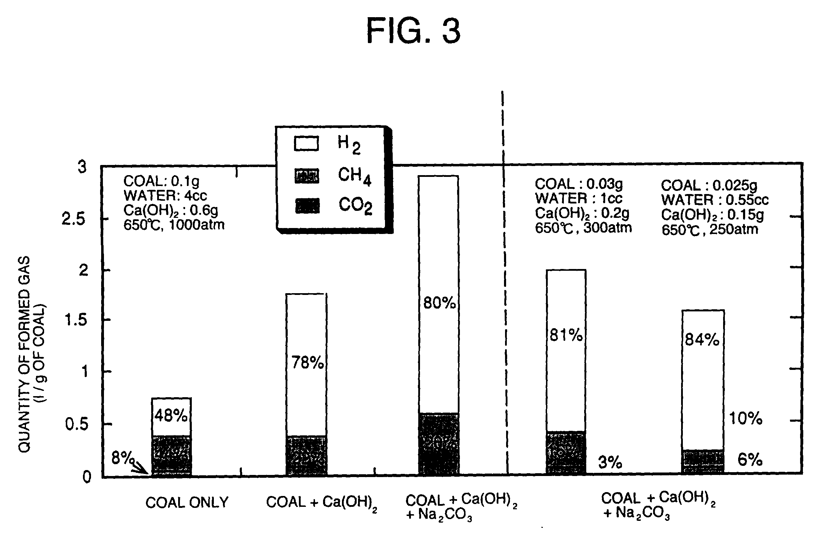

A process of Example 1 was similarly repeated except that 0.025 g of Taiheiyo Coal, 0.15 g of $Ca(OH)_2$, 0.025 g of $Na_2CO_3$ and 0.55 cc of pure water to be initially charged were used under a pressure of 250 atmosphere.
For reference, using a comparative sample prepared only from pulverized coal and water, a process of Example was repeated.
A result obtained was shown in Fig. 3.
When coal and water are thermally decomposed in supercritical water at a temperature of 650 °C and a pressure of 1,000 atmosphere, quantity of gas thus yielded is only 0.7 l/g containing lower hydrogen content of 48 %. When $Ca(OH)_2$ is added as the carbondioxide absorbing substance to the reaction system, quantity of formed gas is 2.5 times and the hydrogen content therein improves to 78 %. Moreover, an addition of $Na_2CO_3$ allows to further increase the quantity of gas. Fig. 3 shows that $Na_2CO_3$ functions as a catalyst to improve a reaction rate of the reaction formula (2). As a matter of course, sulfur can be captured by an addition of $Na_2CO_3$ as a water soluble salt.
When the pressure of reaction is lowered, although the quantity of formed gas decreases, the hydrogen content in the gas is still high, which suggest that such a decrease in gas formation is simply due to reduction of the reaction rate. Fig. 3 shows a practical result of the present invention and, at the some time, dearly demonstrates an effect of additives.
According to the formula (9), 2 mole of hydrogen is produced from 1 mole of carbon if the heat source is secured, and 2.83 $Nm^3$ /kg of hydrogen can be produced theoretically from coal containing 76 % of carbon. It is found from the result of experiments that a certain amount of $CH_4$ is formed as a by-product other than hydrogen. This would be caused by a reaction of $CO_2$ and $H_2$.
When $Na_2CO_3$ is not added to the reaction system, sulfur components in the coal are solidified as $CaSO_4$, which is insoluble in water and hardly separated from other solid substances. An addition of $Na_2CO_3$ allows sulfur in the coal to be finally captured as water soluble $Na_2SO_4$ and advantageously removed out of the system by water treatment.

Examples 5 to 8

Four kinds of coal and coal product, i.e., Australian Yaloon Coal (lignite), Pacific Ocean coal (bituminous coal), Australian Bleasole Coal (bituminous coal) and carbonized Bleasole Coal, respectively in amount of 0.1 g, were used in series as organic materials. With each of these materials, 0.6 g of $Ca(OH)_2$ as a carbon dioxide absorbing substance, 4 cc of water and 0.1 g of $Na_2CO_3$ as a reaction catalyst and a sulfur capturing agent were added and externally heated in an electric furnace to conduct the reaction for 20 minutes at a temperature of 650 °C under a pressure of 1,000 atmosphere. Although the pressure is relatively high as 1,000 atmosphere in these Examples, it seems possible to obtain a similar result when the reaction is conducted under lower pressure as used in Example 3.

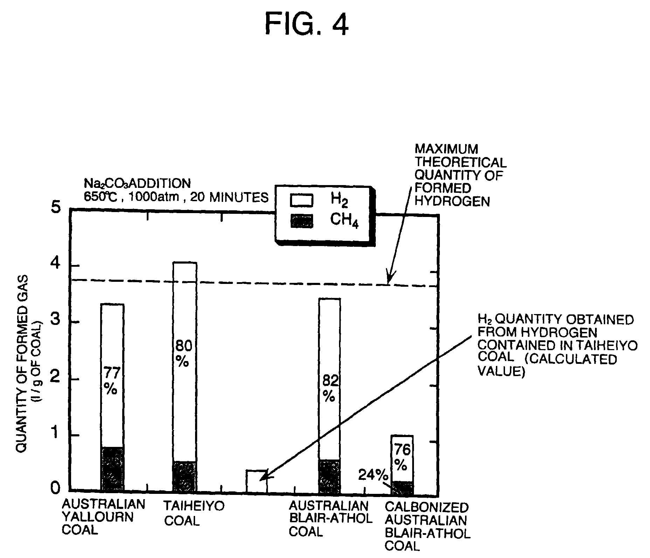

Then, the reaction mixture was cooled, and the generated gas was collected in a sampling bag to measure quantity of the thus generated gas, while composition thereof was measured by gas chromatography. Solid and liquid products left in the reaction vessel were collected and analyzed. Quantity of the thus generated gas per 1 g of carbon in each organic material and composition thereof are shown in Fig. 4. In the center of the graph, for a purpose of comparison, there is shown an amount of hydrogen which is contained in Pacific Ocean Coal and would be completely released.

Three coal materials except the carbonated sample yielded nearly theoretical amount of hydrogen. In the case of the carbonated sample, a similar result can be obtained if the reaction time is prolonged sufficiently. Referring to the theoretical amount of hydrogen which would be generated from Pacific Ocean Coal, yield of hydrogen is far beyond the theoretical value as shown in Fig. 4, which is considered that initially supplied water as one of reaction materials is converted to hydrogen according to the reaction formula (2). Further, no sulfuric substance originated from coal materials is detected, which suggests that sulfur is solidified or immobilized as a water soluble substance.

Examples 9 to 12

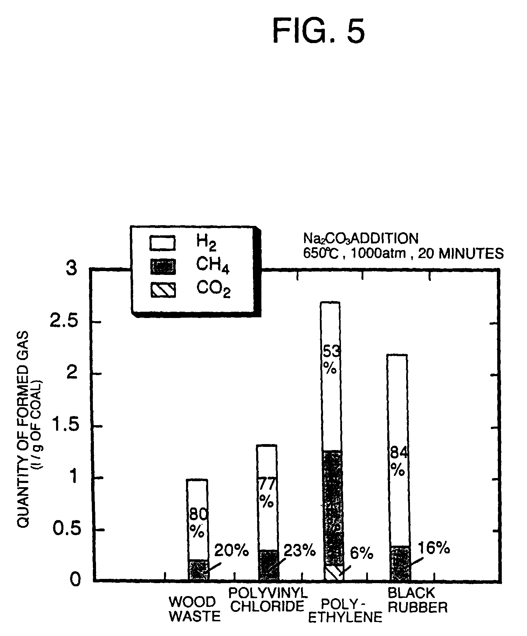

Four kinds of organic materials, i.e., wood waste, polyvinyl chloride, polyethylene and black rubber, respectively in amount of 0.1 g, were used in series as a starting material. With each of these materials, 0.6 g of $Ca(OH)_2$ as a carbon dioxide absorbing substance, 4 cc of water and 0.1 g of $Na_2CO_3$ as a reaction catalyst and a sulfur capturing agent were added and externally heated in an electric furnace to conduct the reaction for 20 minutes at a temperature of 650 °C under a pressure of 1,000 atmosphere. Then, the reaction mixture was cooled, and the generated gas was collected in a sampling bag to measure quantity of the thus generated gas, while composition thereof was measured by gas chromatography. Solid and liquid products left in the reaction vessel were collected and analyzed. Quantity of the thus generated gas and composition thereof are shown in Fig. 5.

Fig. 5 shows a result of experiments in which organic materials other than coal are used in the present invention.

It is easily understood that all of burnable carbon containing materials are useful in the present invention as a starting organic material.

Application of Examples to a Practical Process

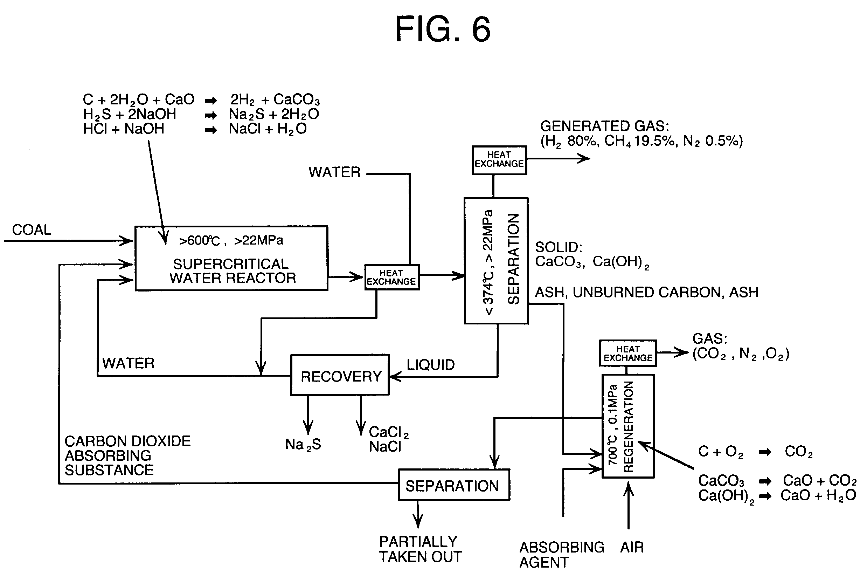

Results of Example 1 to 12 were successfully applied to a practical process as shown in Fig. 6.

Although several processes can be constructed, basic concepts of the process herein were as in the following:

(1) All of required heat energy is supplied by coal as a starting material; and
(2) An internal heating system of high efficiency is employed to heat the starting material. That is, heat of reaction of CaO is used to heat a slurry of coal.

Under these concepts, a reaction rate of carbon contained in coal to be charged is controlled to a rather low level to keep higher carbon content in solid products to be taken out of a reactor, which is used to convert the carbon with air to $CO_2$ in a regenerator (a burner for unburned carbon), thereby generating heat. The thus generated heat is used to decompose $CaCO_3$ and $Ca(OH)_2$ so as to form CaO. In this case, $CO_2$ concentration in the exhaust gas is about 25 %. If the exhaust gas is recycled to the CaO regenerator of external heating type, highly concentrated $CO_2$ of about 100 % can be recovered. This means that carbon dioxide generated from coal can be recovered in such a high concentration without a specific concentrating and separating operation. The above mentioned manner is also advantageous from a standpoint of exhaust control of warming gas.

Mass balance and heat balance of coal treated at a rate of 1 ton per hour were calculated from a result of experiments. When 1 ton of coal is supplied, 50 % thereof is reacted to form 1,400 $Nm^3$ of hydrogen and methane. The residual carbon is subjected to combustion with air or oxygen in the regenerator, thereby regenerating CaO from $CaC_{o3}$ and $Ca(OH)_2$ due to heat of combustion. Equivalent quantity of heat is generated when CaO and $H_2O$ are mixed and, as a result, heat of combustion of coal is almost used to form gas, thereby achieving higher cold gas efficiency, i.e., a rate of heat of combustion of generated gas to that of charged coal. When required quantity of heat can be obtained from the regenerator, quantity of generated gas is improved by increasing the reaction rate of the reactor.

A characteristic feature of the present invention is that the present process can be widely applied to organic materials other than coal. A high flexibility of the present invention is also worthy of note. The present process is classified by starting materials as in the following:

(1) A process starting from coal;
(2) A process starting from heavy oil, reduce pressure residual oil, etc.;
(3) A process starting from plastics; and
(4) A process starting from biomass.

Although these processes are somewhat different from each other, each process can be conveniently constructed depending on respective starting materials to produce hydrogen at high efficiency and prevent exhaustion of harmful elements to environment. Such a hydrogen production is meaningful from a standpoint of both energy and material recovery. Further, $CO_2$ as a byproduct can be recovered in high concentration, which is quite advantageous from a standpoint of treatment and utilization of $CO_2$ as global warming gas and is less stimulate to environment. It is possible to provide a technology of selective hydrogen production by simply combining cheap and general substances or materials consisting of carbon containing heat source materials such as coal, petroleum, biomass, plastics, etc.; water, air, limestone and sodium carbonate. Concrete effects of the present invention are as in the following:

(1) Fossil fuel resource, especially coal, and biomass can be converted to dean hydrogen energy without affecting environment. Variety of advanced usage of hydrogen as an energy source has been developed, thereby the fossil fuel resources being effectively used for ever;
(2) Even coal containing high moisture such as lignite can be used as it is without conventionally drying:
(3) It is possible to capture polluting substances such as sulfur, chlorine, etc. contained in carbonous materials; and
(4) Plastics are not used as direct heat energy but convened to energy effectively, which is applicable both of energy recovery and material recycle. There is no problem of dioxine or hydrogen chloride formed by plastics combustion.

The features disclosed in the foregoing description, in the claims and/or in the accompanying drawings may, both separately and in any combination thereof, be material for realising the invention in diverse forms thereof.

**Claims**

1. A method for producing hydrogen by reading a carbon containing material and supercritical water followed by reduction thereof to form hydrogen, characterized in that thermochemical decomposition of the carbon containing material is conduced in the presence of a carbon dioxide absorbing substance at least in an amount sufficient to absorb all of generated carbon dioxide in a reaction system under a condition of pressure higher than 220 atmosphere and temperature higher than 600 °C without substantially adding an oxidizing agent.

2. A method for producing hydrogen claimed in claim 1 in which a carbon containing material and a carbon dioxide absorbing substance are supplied to a reaction system, while hydrogen and a carbonate are taken out of the reaction system.

3. A method for producing hydrogen claimed in claim 1 or 2 in which a carbonate is convened by thermal decomposition to a carbondioxide absorbing substance so as to recycle thereof to a reaction system.

4. A method for producing hydrogen claimed in any one of the above claims 1 to 3 in which CaO, MgO or iron oxide (FeO, $Fe_2O_3$ or $Fe_3O_4$) is used as a carbondioxide absorbing substance.

5. A method for producing hydrogen claimed in any one of the above claims 1 to 4 in which a carbon containing material is one or more than two of coal, petroleum, plastics and biomass.

6. A method for producing hydrogen claimed in any one of the above claims 1 to 5 in which reaction temperature is 650 to 800 °C.

7. A method for producing hydrogen claimed in any one of the above claims 1 to 6 in which, in addition to a carbondioxide absorbing substance, a substance of forming a water soluble salt with sulfur and halogen is present at least in an amount sufficient to absorb all of generated sulfur and halogen in a reaction system.

8. A method for producing hydrogen claimed in any one of the above claims 1 to 7 in which a substance capable of forming a water soluble salt with sulfur and halogen is one or more than two compounds selected from a group consisting of NaOH, $Na_2CO_3$, KOH and $K_2CO_3$.

# FIG. 1 (PRIOR ART)

2 PUMP

ORGANIC
MATERIAL AND
WATER

OXIDIZING AGENT

WARM WATER
AND STEAM

3
COOLER

HEATING

COOLING WATER

DECOMPOSITION
PRODUCT ($CO_2$, $N_2$)

1
SUPERCRITICAL
WATER REACTOR

4 GAS SEPARATOR

COLLECTED WATER,
LIQUID PRODUCT
AND SOLID RESIDUE

# FIG. 2

1.6

7 CAPILLARY

6
REACTING PART

INTERNAL
CAPACITY  13 cm³

100

30

5
MICROAUTOCLAVE

FIG. 3

# FIG. 4

QUANTITY OF FORMED GAS (l / g OF COAL)

Na₂CO₃ADDITION
650°C , 1000atm , 20 MINUTES

☐ H₂
■ CH₄

MAXIMUM
THEORETICAL
QUANTITY OF
FORMED
HYDROGEN

H₂ QUANTITY OBTAINED
FROM HYDROGEN
CONTAINED IN TAIHEIYO
COAL (CALCULATED
VALUE)

77%

80%

82%

24%

76%

AUSTRALIAN YALLOURN COAL

TAIHEIYO COAL

AUSTRALIAN BLAIR-ATHOL COAL

CALBONIZED AUSTRALIAN BLAIR-ATHOL COAL

# FIG. 5

# FIG. 6

C + 2H$_2$O + CaO → 2H$_2$ + CaCO$_3$
H$_2$S + 2NaOH → Na$_2$S + 2H$_2$O
HCl + NaOH → NaCl + H$_2$O

COAL

WATER

CARBON DIOXIDE ABSORBING SUBSTANCE

SUPERCRITICAL WATER REACTOR
>600℃ , >22MPa

HEAT EXCHANGE

WATER

RECOVERY

CaCl$_2$
NaCl

Na$_2$S

SEPARATION
<37₄℃ , >22MPa

HEAT EXCHANGE

GENERATED GAS:
(H$_2$ 80%, CH$_4$ 19.5%, N$_2$ 0.5%)

SOLID: CaCO$_3$, Ca(OH)$_2$
ASH, UNBURNED CARBON, ASH

LIQUID

SEPARATION

PARTIALLY TAKEN OUT

HEAT EXCHANGE

GAS:
(CO$_2$ , N$_2$ ,O$_2$)

REGENERATION
700℃, 0.1MPa

ABSORBING AGENT

AIR

C + O$_2$ → CO$_2$
CaCO$_3$ →
Ca(OH)$_2$ → CaO + CO$_2$
CaO + H$_2$O